# EUROPÄISCHE PATENTANMELDUNG

(11) **EP 3 404 476 A1**
(43) Veröffentlichungstag der Anmeldung: **21.11.2018**
(21) Anmeldenummer: 18172984.9
(22) Anmeldetag: 17.05.2018
(51) Int. Cl.: G03B 1/42, G03B 1/58, G03B 1/00

(54) **FILMFÜHRVORRICHTUNG FÜR EINEN SCHONENDEN, STABILEN UND GLEICHMÄSSIGEN VORBEITRANSPORT EINES FILMS AN EINER ABTASTEINHEIT UND FILMBEARBEITUNGSANORDNUNG MIT EINER FILMFÜHRVORRICHTUNG**

(30) Priorität: 17.05.2017 EP 17171598
(71) Anmelder: CINE PROJECT Kinodesign & AV-Technik GmbH, 84032 Landshut (DE)
(72) Erfinder: CINE PROJECT Kinodesign & AV-Technik GmbH, 84032 Landshut (DE)
(74) Vertreter: Hofstetter, Schurack & Partner

(57) **Zusammenfassung**

Die Erfindung betrifft eine Filmführvorrichtung (12) für einen Vorbeitransport eines Films (14) an einer Abtasteinheit (20, 24, 28, 30), wobei die Filmführvorrichtung (12) einen um eine Rotationsachse (A) rotierbaren Rahmen (16) aufweist, der einen ersten Rahmenteil (16a) mit einer ersten Filmauflagefläche (42) und einen zweiten Rahmenteil (16b) mit einer zweiten Filmauflagefläche (44) aufweist, wobei die erste und zweite Filmauflagefläche (42, 44) jeweils zylinderförmig ausgebildet sind, in Umfangsrichtung (U) bezüglich der Rotationsachse (A) verlaufen und in axialer Richtung bezogen auf die Rotationsachse (A) zueinander angeordnet sind. Dabei weist der Rahmen (16) eine Halterung (46) zum Halten zumindest eines auf der ersten und zweiten Filmauflagefläche (42, 44) aufliegenden Filmabschnitts eines Films (14) auf, die dazu ausgelegt ist, auf zwei gegenüberliegende Kanten (14d) des Filmabschnitts, die den Filmabschnitt in seiner Breite (B) begrenzen, einander zugewandt gerichtete Haltekräfte aufzubringen.

## Beschreibung

Die Erfindung betrifft eine Filmführvorrichtung für einen Vorbeitransport eines Films an einer Abtasteinheit, wie zum Beispiel bei Filmbearbeitungstischen und Scannern, wobei die Filmführvorrichtung einen um eine Rotationsachse rotierbaren Rahmen aufweist, der einen ersten Rahmenteil mit einer ersten Filmauflagefläche und einen zweiten Rahmenteil mit einer zweiten Filmauflagefläche aufweist, wobei die erste und zweite Filmauflagefläche jeweils zylinderförmig, insbesondere kreiszylinderförmig, ausgebildet sind, in Umfangsrichtung bezüglich der Rotationsachse verlaufen und in axialer Richtung bezogen auf die Rotationsachse zueinander angeordnet sind. Zur Erfindung gehört auch eine Filmbearbeitungsanordnung mit einer solchen Filmführvorrichtung.

Aus dem Stand der Technik ist es bekannt, Filme zu durchleuchten und das beim Durchleuchten durch den Film durchtretende Licht weiter zu verarbeiten, beispielsweise aufzunehmen und zu digitalisieren. Beispielsweise wird dieses Verfahren angewendet, um die sich aus der Abfolge der Bilder auf dem Film ergebende Filmsequenz zu digitalisieren, sodass eine Nachbearbeitung der Filmsequenz möglich wird. Ebenso werden derartige Verfahren zum Archivieren von Filmmaterial eingesetzt, wobei die durch das Durchleuchten entstehenden Lichtsignale in elektrische Signale umgewandelt und diese elektrischen Signale, gegebenenfalls nach einer Digitalisierung, gespeichert werden. Ebenso bietet das Durchleuchten eines Films die Möglichkeit, ein durch eine optische Darstellung auf dem Film aufgebrachtes Tonsignal auszulesen, indem die optische Wiedergabe des Tonsignals durchleuchtet oder angeleuchtet wird, und das dadurch entstehende Lichtsignal durch geeignete Mittel in ein Tonsignal umgewandelt wird. Auch kann das Durchleuchten eines Films ferner dazu dienen, die Lage des Films zu erkennen, wozu beispielsweise, soweit vorhanden, Perforationslöcher eines Films verwendet werden.

Durch die Verschiebung des Einsatzschwerpunktes von Filmbearbeitungstischen von der Filmnachbearbeitung hin zu Filmarchiven, muss auf die Tatsache hingewiesen werden, dass es hierbei nicht mehr um fabrikneuen, sondern vielmehr um teilweise dramatisch gealterten und empfindlichen Film geht. Der durch die Belichtung ausgelöste fotochemische Prozess wird durch die anschließende Entwicklung und Fixierung nicht komplett aufgehalten. Vielmehr verändern sich je nach Alter, damals vorherrschender Technik und Lagerungsbedingungen die Emulsionen und die Trägermaterialien. Dies bringt verschiedene Phänomene mit sich, auf welche insbesondere die Transporttechnik eingehen muss.

Grundsätzlich wird beim Transportieren eines Films, um diesen wie oben beschrieben zu durchleuchten, üblicherweise eine Filmzufuhr verwendet, in der der Film der Filmführvorrichtung zugeführt werden kann, sowie eine Filmabfuhr, mit der der Film von der Filmführvorrichtung weggeführt werden kann. Die Filmzufuhr und die Filmabfuhr können zum Beispiel in Form von Rollen bereitgestellt sein, von der einen Rolle wird der Film abgewickelt und auf die andere aufgewickelt und wird zwischendrin an der Filmführvorrichtung vorbei geführt und dabei durchleuchtet. Gerade jedoch bei älteren Filmen ergeben sich dabei Probleme. Zum einen schrumpft mit der Zeit das Filmmaterial in unterschiedlicher Stärke, je nach Lagerung bis zu 3 Prozent. Nicht nur die Laufzeit wird kürzer, die Verzahnung herkömmlicher Transportrollen passt dann nicht mehr in die Perforation. Verzahnungen mit engen Toleranzen, die für einen guten Bildstand nötig sind, schädigen dann die Perforation. Es kann sogar passieren, dass der Film neu perforiert wird. Je mehr Zähne im Film in Eingriff sind, desto größer ist die Gefahr, da die Schrumpfungsfehler sich addieren. Zudem ist die Wicklung von Filmrollen im Archiv in der Regel nicht fest. Professionell eingelagerter Film hat einen definierten Filmzug und die Länge des Films verändert sich mit der Einlagerungsdauer. Zieht man an dem losen Ende einer lockeren Filmrolle, zieht sich der Film zusammen, bis die Haftreibung der Zugkraft entspricht. Das Material wird verkratzt und bekommt so die bekannten, irreparablen Laufstreifen. Ein weiteres Problem stellen mit benachbarten Wicklungen verklebte Stellen dar. Wird eine Filmrolle abgewickelt, kommen unweigerlich Stellen, an denen der Film mit seinen Nachbarwicklungen verklebt ist. Entweder diese Störgröße erschüttert das ganze System, sodass der Film aus seiner Führung fällt und so beschädigt werden kann, oder der Film reißt. Zudem kann die Perforation eingerissen sein oder zumindest streckenweise komplett fehlen. Ein Transport an der Perforation ist nicht mehr möglich. Am Bildfenster ist der Film physikalisch nicht mehr exakt zu halten und ein guter Bildstand bei der Aufnahme wird schwierig. Ein weiteres Problem stellt das Vinegar-Syndrom I dar. Besonders bei Azetat-Filmen wird durch feuchte und zu warme Lagerung ein Austreten von Chemikalien ausgelöst, begleitet von einem beißenden Essiggeruch. Bei dem Vinegar-Syndrom II wird nach dem Austreten von Chemikalien eine Schrumpfung ausgelöst, die mit einer Knickbildung der Gelatineschicht einhergeht. Zudem kann ein Film auch spröde austrocknen. Rollenradien und große Rollenumschlingungswinkel können herbeiführen, dass sich die Emulsion von der Trägerschicht ablöst. Weiterhin können chemische Veränderungen den Film aufquellen lassen. Die Emulsion kann durch Berührung irreparabel verschmieren. Weiterhin kann der Film durch Einwirkung von Temperatur und Feuchtigkeit unregelmäßig verdrillt sein. Damit kann der Film aus seiner Bahn laufen und verkratzen. Darüber hinaus ist zum Beispiel Nitratfilm selbstentzündlich. Besonders problematisch ist somit der bis in die 50er Jahre auf organischen Substanzen aufgebaute Nitratfilm. Je nach Lagerdauer kann der Film schon bei Temperaturen um die 30° Celsius entflammen. Um einen Film von der Zuführrolle abzuwickeln und auf die Filmabfuhrrolle aufzuwickeln, ist letztendlich eine auf den Film wirkende Zugkraft erforderlich. Wegen der Vielzahl an Zerfallssyndromen kann aber nicht eine einzige definierte Zugkraft für eine ideal feste Wicklung definiert werden. Von zentraler Bedeutung dabei ist immer, dass dieser einmal gewählte Filmzug über den gesamten Radius der Rolle möglichst konstant gehalten wird. Um dies zu ermöglichen, ist es vorteilhaft, eine Trennung der Zugkräfte von Auf- und Abwickelseite vorzunehmen, da hierdurch für das jeweilige Stadium des Films eine optimale Wicklung erreicht werden kann.

Bei typischen Schneidetischen läuft der Film auf der Tischoberfläche zum Beispiel von links nach rechts und wird auf Bildhauben durch Mattscheiben-Durchprojektion abgebildet. Unter den Bildhauben sind auf dem Tisch typischerweise diverse Rollen zur Führung und Abnahme von Bild und Ton auf den sogenannten Laufwerksplatten angebracht, die für Wiedergabe und Gleichlauf der Bänder sorgen. Unter der jeweiligen Bildhaube liegen die dazugehörigen Laufwerksplatten, zum Beispiel für 16-Millimeter- und für 35-Millimeter-Material, auf denen die Tonköpfe, die Antriebe und Beruhigungsrollen angebracht sind.

Im Gegensatz zu Scannern können auf einem Schneidetisch gleichzeitig, das heißt synchron, mehrere Bänder, zum Beispiel ein Filmband sowie zum Beispiel zwei Ton-Magnetbänder, laufen. Der Bildpfad kann beispielsweise für einen 35-Millimeter-Film mit aufgebrachtem Lichtton geeignet sein und weist ein Polygon zur Bilderfassung auf, welches einen schrittweisen Filmtransport ermöglicht. Die Lichttoneinheit zur Erfassung der Tonspur benötigt dagegen einen kontinuierlichen Transport. Weiterhin gibt es bis zu zwei Tonpfade für zwei Magnetbänder mit 35 Millimeter Perforation. Die Tonköpfe können wie vom Tonbandgerät bekannt ausgebildet sein. Auch hier ist ein kontinuierlicher Filmtransport der betreffenden Magnettonbänder erforderlich. Das zentrale Element auf einer Laufwerksplatte ist das oben erwähne Polygon, welches als Filmführvorrichtung dient. Ein solches Polygon kann einen rotierender 18- oder 24- oder 32-eckiger (Hohl)Zylinder, insbesondere ein hohles 18- oder 24- oder 32-eckiges, gerades Prisma, aus Glas darstellen. Die flachen Außenkanten begleiten das Filmband während der Drehbewegung an der Lichtquelle vorbei.

Das Bild auf dem kontinuierlich transportierten Film wird durch ein Prismensystem permanent gegen die Drehrichtung zurückgespiegelt und anschließend sehr schnell gegen das nächste Filmbild getauscht, um so den Eindruck eines kurz stehenden Bildes zu erzeugen, insbesondere 24 mal pro Sekunde. Das Rhombusprisma in der Mitte des Polygons lenkt den Strahl eines jeden Bildpunktes zusammen mit zwei Zylinderlinsen um das Drehzentrum des Polygons und korrigiert die Bildverschiebung. Der Film wird dabei durch den Zahnkranz unter den Glaselementen festgehalten und im Moment der Darstellung sehr stabil und gleichmäßig transportiert. Bei einer Beschädigung der Perforation am Film, was durch die eingangs beschriebenen Probleme bei Filmen der Fall sein kann, ist ein Transport mittels Zahnkranz jedoch nicht mehr möglich.

Eine weiterhin bekannte Technik beim Filmtransport ist der sogenannte Drive-Antrieb. Um eine ideal fest gewickelte Filmrolle umzurollen, würde nur ein Antrieb auf der Aufwickelseite genügen. Da aber das Drehmoment mit steigendem Radius der Rolle zunimmt, wird die Filmrolle auf der Abwickelseite zusammengezogen. Durch Staubpartikel in der Emulsion entstehen die aus analogen Kinovorführungen bekannten, irreparablen Laufstreifen. Dagegen halfen bis in die 90er mechanische, gewichtsabhängige Friktionen. Um den Film so bei idealer Wicklung regelungstechnisch konstant zu halten, kann ein bremsender zweiter Antrieb in die Abwickelseite integriert werden, der das wachsende Drehmoment ausgleicht. Eine Filmzugsensorik steuert hierbei die Motordrehzahlen. Zusätzlich kann jetzt auch nach links zurückgespult werden. Dieses Prinzip funktioniert aber nur für dieselbe Wickelkraft auf beiden Tellern. Will man beispielsweise eine locker gewickelte, nicht ideale Rolle in eine feste Wicklung überführen, zieht sich auch hier das Material auf der Abwickelseite zusammen. Divergente Wicklungen sind also so nicht zu bearbeiten. Die Lösung liegt im sogenannten Drive-Antriebs-Konzept. Hierbei wird ein dritter Motor in die Mitte integriert, der den Film festhält und die Kräfte der Ab- und Aufwickelseite entkoppelt. Er reagiert direkt auf Befehle des Bedieners und bestimmt Drehrichtung und Drehzahl des Systems. Auf- und Abwickelmotor steuern sich selbst, indem sie den jeweiligen Film so konstant halten: Steigt der Filmzug, regeln sie ihn runter, sinkt er, regeln sie ihn rauf und ziehen an. Mit diesem System können vorteilhafterweise divergente Wicklungen unabhängig voneinander eingestellt werden, um zum Beispiel einen locker gewickelten Film in eine feste Rolle zu überführen, ohne dass sich der Film zusammenzieht - denn im Archivbereich werden die Filmrollen nicht zwingend gleich fest gewickelt.

Weiterhin existiert ein sogenannter Capstan-Antrieb. Ein Capstan ist eine gleichmäßig rotierende Antriebswelle, die in Kombination mit einer Andruckrolle das Band in einem Bandgerät, zum Beispiel Tonbandgerät, Kassettenrekorder, Schneidetisch, Scanner, mit konstanter Geschwindigkeit am Tonkopf vorbei zieht. Diese konstante Geschwindigkeit ist für eine flüssige Darstellung des Films, aber vor allem für eine gute Tonwiedergabe, insbesondere ohne Leiern, notwendig. Dabei wird der Film allerdings mechanisch sehr beansprucht. Zudem gibt es für Filmscanner und Filmbearbeitungstische generell zwei Antriebsprinzipien, den sogenannten Sprocket-Drive und den Sprocket-less-Drive. Beim Sprocket-Drive greift ein Antriebsrad beziehungsweise ein sogenannter Spargreifer mit Zähnen in die Filmperforation ein und zieht den Film zuverlässig und mit definierter Geschwindigkeit über das Bildfenster. Dabei gibt es keinen Schlupf, Schrumpfungsdefizite werden in jeder Perforation toleranzausgeglichen. Beim Sprocket-less-Drive berührt das Antriebsrad den Film großflächig an der Oberfläche über eine adhäsive Kunststoffschicht.

Je nach Zustand des Materials können beide Antriebsprinzipien für die Erhaltung des Materials schädlich sein.

Wünschenswert wäre es also, einen Film schonend, insbesondere mittels Drive-Antriebskonzept, von einer Wicklung mit definierter, einstellbarer Zugkraft in eine Wicklung mit anderer definierter Zugkraft zu überführen. Dieses Konzept besteht also aus einem Auf- und Abwickelantrieb, die eigenständig den jeweiligen Filmzug steuern, und der dazwischenliegenden Führung, die den Film festhält. Diese trennt die unterschiedlichen Zugkräfte auf beiden Seiten und nimmt die Kräftedifferenz auf. Wird diese mittlere Halterung selbst bewegt oder als dritter Antrieb ausgeführt, wird der Film auf beiden Seiten mit unterschiedlichem Filmzug bewegt. Auf diese Weise kann auf der rechten Seite des Tisches eine Wicklung mit einem anderen definierten Filmzug bereitgestellt werden als auf der linken Seite. So wird es auch möglich, Filmwicklungen mit uneinheitlichem Filmzug, zum Beispiel durch Drehmomentwechsel, Klebestellen oder Materialwechsel, zuverlässig in eine einheitliche Wicklung mit definierter einstellbarer Zugkraft zu überführen. Der Film sollte dabei mindestens mit der gleichen Kraft festgehalten werden, mit der der stärkere der beiden selbstregelnden Auf- oder Abroll-Antriebe zieht. Übliche Zug- beziehungsweise Wickelkräfte im Archivbereich sind 25 Gramm entsprechend 0,245 Newton als minimale Zugspannung und 350 Gramm entsprechend 3,432 Newton als maximale Zugspannung.

Zusätzlich besteht das Erfordernis des Gleichlaufs. Um Gleichlaufschwankungen gering zu halten und einen möglichst präzisen Bildstand zu gewährleisten, benötigt das System idealerweise ein hohes Massenträgheitsmoment, wie dies zum Beispiel durch den Capstan-Antrieb bereitgestellt wird. Trotzdem sollte das Antriebssystem selbst wenig träge Masse aufweisen, um Schlupf und Synchronschwankungen durch Massenträgheit beim Einsatz einer Bewegung oder bei einem Richtungswechsel zu vermindern.

Der Drive-Antrieb sollte mit dem empfindlichen Film durch eine ausreichende Haftreibung, zirka 3,5 Newton, verbunden sein. Bei Tonbandgeräten und in herkömmlichen Scannern erreicht man dies bisher durch Andruckrollen, die das Band gegen den Capstan-Antrieb drückten. Diese dürfen bei den Archiven nur nicht eingesetzt werden, da hierdurch möglichst wenig Berührung, vor allem an den Flächen der Bild- und Tonaufzeichnungen, geführt werden muss. Dieser Kraftschluss zwischen Film- und Antriebsrad ist zusätzlich erschwert, da, wie bereits beschrieben, gerade Filmmaterial in Archiven verdrillt, klebrig oder brüchig sein kann und die Perforation manchmal nicht verwendet werden kann. Dies bedeutet, dass der Film über den Ort der Abtastung möglichst fest gehalten und positioniert, gleichzeitig mit hohem Massenträgheitsmoment bei wenig Masse transportiert werden sollte, aber zugleich der Großteil der schwierig zu greifenden Oberfläche kaum berührt werden darf.

Durch Schrumpfung des Filmes wird die Belastung einzelner Perforationslöcher beim Zahntransport und damit die Neigung zu Einriss und Filmriss erhöht. Zudem kann die oft schadhafte oder fehlende Perforation nicht verwendet werden. Entsprechend ist es also notwendig, den Film durch Haftreibung zu transportieren. Dies ist jedoch in den meisten Fällen wiederum sehr schädlich für den Film.

Eine gattungsgemäße Filmführvorrichtung ist als Filmführung beispielsweise in der DE 10 2009 017 534 A1 beschrieben. Dort ist eine Vorrichtung zum Durchleuchten eines Films offenbart, mit einer Lichtquelle, aus der ein Lichtstrahl austritt, mit dem der Film durchleuchtet werden kann, eine Filmführung, mit der der Film so geführt werden kann, dass der Lichtstrahl einen Abschnitt des Films durchleuchten kann, einer Filmzufuhr, mit der der Film der Filmführung zugeführt werden kann, und einer Filmabfuhr, mit der der Film von der Filmführung fortgeführt werden kann. Dabei weist die Filmführung eine Auflage auf, die um eine durch den Mittelpunkt der Auflage laufende Rotationsachse rotierbar ausgebildet ist und die eine zu der Rotationsachse rotationssymmetrisch ausgebildete Umfangsfläche aufweist, wobei der Film zumindest mit einem Teil seiner Breitenerstreckung über einen Abschnitt der Umfangsfläche auf der Umfangsfläche aufliegen kann, und die Lichtquelle derart angeordnet ist, dass der von ihr erzeugte Lichtstrahl den Film durchdringt, wenn der Film zumindest mit einem Teil seiner Breitenerstreckung über einen Abschnitt der Umfangsfläche auf der Umfangsfläche aufliegt. Die Filmzufuhr weist dabei eine Filmspule und eine vorgespannte Spannungsrolle auf. Ferner weist die Filmabfuhr eine Filmspule, eine federbelastete Spannungsrolle und eine Antriebsrolle, die als Capstan-Rolle ausgebildet ist, auf. Wie beschrieben, ist ein Capstan-Antrieb für den Film sehr belastend, da hierbei der Film mit seiner gesamten Breitenerstreckung auf der relativ klebrigen Rollenoberfläche aufliegt.

Aufgabe der vorliegenden Erfindung ist es daher, eine Filmführvorrichtung für einen Vorbeitransport eines Films an einer Abtasteinheit sowie eine Filmbearbeitungsanordnung bereitzustellen, die einen möglichst schonenden Filmtransport ermöglichen. Insbesondere soll durch die Erfindung oder ihre Ausführungsformen vorzugsweise für gealterten, zerfallenen und verformten Film ein möglichst umfassendes Transportsystem für Bild- und Tonaufzeichnung bereitgestellt werden, welches unabhängig von den Zugkräften der Auf- und Abwickelseite eine Überführung von Wicklungen der Filmrollen mit unterschiedlichen Zugkräften erlaubt und gleichzeitig mit geringem technischen Aufwand gute Bildstands- und Gleichlaufeigenschaften für Bild- und Tonaufnahmen ermöglicht und den empfindlichen und schwer zu greifenden Film oder das Tonband dabei nicht beschädigt oder selbst dabei Schaden nimmt.

Diese Aufgabe wird gelöst durch eine Filmführvorrichtung und eine Filmbearbeitungsanordnung mit den Merkmalen gemäß den jeweiligen unabhängigen Patentansprüchen. Vorteilhafte Ausgestaltungen der Erfindung sind Gegenstand der abhängigen Patentansprüche, der Beschreibung sowie der Figuren.

Eine erfindungsgemäße Filmführvorrichtung für einen Vorbeitransport eines Films an einer Abtasteinheit weist einen um eine Rotationsachse rotierbaren Rahmen auf, der einen ersten Rahmenteil mit einer ersten Filmauflagefläche und einen zweiten Rahmenteil mit einer zweiten Filmauflagefläche aufweist, wobei die erste und zweite Filmauflagefläche jeweils zylinderförmig, insbesondere kreiszylinderförmig, ausgebildet sind, in Umfangsrichtung bezüglich der Rotationachse verlaufen und in axialer Richtung bezogen auf die Rotationsachse zueinander angeordnet sind. Dabei weist der Rahmen eine Halterung zum Halten zumindest eines auf der ersten und zweiten Filmauflagefläche aufliegenden Filmabschnitts eines Films auf, die dazu ausgelegt ist, auf zwei gegenüberliegende Kanten des Filmabschnitts, die den Filmabschnitt in seiner Breite begrenzen, einander zugewandt gerichtete Haltekräfte aufzubringen.

Dadurch lässt es sich vorteilhafterweise bewerkstelligen, dass ein Film durch diese Halterung an den Filmkanten gehalten wird, wie beispielsweise eine Spielkarte zwischen den Fingern einer Hand gehalten werden kann. Der Film wird also in dieser Halterung quasi eingeklemmt, wobei die Haltekräfte dann im Wesentlichen parallel zur Filmfläche gerichtet sind. Hierdurch wird die Filmfläche an sich nicht beansprucht, da die Kräfte lediglich auf die Kanten des Films einwirken und somit kann vorteilhafterweise ein auf Haftreibung basierender Filmtransport, der eine Auflage des Films über seine gesamte Breite hinweg erfordert, vorteilhafterweise vermieden werden, wie dies beispielsweise bei Capstan-Antrieben der Fall ist, und gleichzeitig ist man nicht auf das Vorhandensein einer Perforation angewiesen. Zusätzlich wird es durch die durch die Halterung bereitgestellten und auf die Kanten eines Films wirkenden Kräfte ermöglicht, auch Toleranzen in der Breite des Films, zum Beispiel im Falle einer Schrumpfung oder einer beschädigten Perforation oder Filmrandes, auszugleichen. Insbesondere ist es vorteilhaft, die Halterung so auszugestalten, dass Filmschrumpfungen bis zu 3 Prozent bezogen auf die Filmbreite ausgeglichen werden können. Dies gilt insbesondere für Filme mit einer Breite von 35 Millimetern oder weniger, zum Beispiel 16 Millimetern oder 8 Millimetern.

Durch diese Halterung wird vorteilhafterweise zusätzlich die Möglichkeit der Nutzung eines Drive-Antriebs bereitgestellt, sodass sich hier unterschiedliche Zugkräfte am Film auf der Antriebs- und Abtriebsseite realisieren lassen beziehungsweise auf der Abwickel- und Aufwickelseite. Dies ist dadurch bedingt, dass diese durch den Rahmen der Filmführvorrichtung bereitgestellte Halterung den Film festhält und damit zur Aufnahme von Kräften ausgelegt ist. Durch die Erfindung lässt sich damit vorteilhafterweise ein Drive-Antrieb realisieren ohne die Notwendigkeit von den Film beeinträchtigenden Capstan-Rollen, der zugleich für den schonenden, stabilen und gleichmäßigen Transport von Filmen mit zumindest zum Teil beschädigten Perforationen oder auch geschrumpften Filmen geeignet ist.

Die beiden Filmauflageflächen, die in Umfangsrichtung bezüglich der Rotationsachse verlaufen, verlaufen also derart, dass ihre Flächennormalen radial verlaufen und immer senkrecht zur Rotationsachse stehen. Weiterhin sind die erste und die zweite Filmauflagefläche derart ausgebildet, dass zumindest ein Filmabschnitt eines Films mit einem ersten Filmrand auf die erste Filmauflagefläche und mit einem zweiten, dem ersten gegenüberliegenden Filmrand auf die zweite Filmauflagefläche auflegbar ist. Die Filmauflageflächen dienen lediglich als leichte Abstützung des Films und können damit sehr gering in ihren Abmessungen ausgeführt sein. Vorzugsweise ist der Rahmen so ausgestaltet, dass ein Film mit maximal 3 Millimetern ausgehend von seiner jeweiligen Kante in seiner Breitenerstreckung auf einer jeweiligen Filmauflagefläche aufliegt, vorzugsweise mit höchstens 1 bis 2 Millimetern. Durch diese geringe Auflagefläche, die zudem sehr schonend für den Film ist, lässt sich der Film vorteilhafterweise in nahezu seiner gesamten Breite durchleuchten und dadurch auf dem Film befindliche Einzelbilder, Tonspuren als auch optional zusätzliche Randmarkierungen vollständig erfassen.

Weiterhin kann die Filmführvorrichtung gezielt für die bekannten Filmformate, insbesondere eines der bekannten Filmformate, ausgebildet sein, wie zum Beispiel für einen 35 Millimeter breiten Film oder für einen 16 Millimeter breiten Film, unter Umständen auch für einen 8 Millimeter breiten Film. Vorteilhafte Ausführungsformen der Filmführvorrichtung sehen aber auch Einstellmöglichkeiten vor, um sich an verschiedene Filmbreiten anzupassen, wie dies nachfolgend noch näher beschrieben wird. Weiterhin kann unter einem Film auch lediglich ein Magnettonband verstanden werden, sowie auch ein Filmband mit darauf befindlichen Einzelbilden und unter Umständen mit einer zusätzlichen Tonspur.

Bei einer vorteilhaften Ausgestaltung der Erfindung weist die Halterung einen ersten Halterungsteil und einen zweiten Halterungsteil auf, wobei der erste Rahmenteil den ersten Halterungsteil und der zweite Rahmenteil den zweiten Halterungsteil umfasst. Dabei stehen der erste und zweite Halterungsteil jeweils in radialer Richtung bezüglich der Rotationsachse über die erste und zweite Filmauflagefläche hinaus, wobei das erste und zweite Halterungsteil derart angeordnet sind, dass diese im Falle eines auf der ersten und zweiten Filmauflagefläche anliegenden Filmabschnitts eine jeweilige Kante des Filmabschnitts kontaktieren. Ein Film kann also zwischen diesen beiden Halterungsteilen vorteilhafterweise eingeklemmt werden. Dabei können diese beiden Halterungsteile entweder passend für eine bestimmte Filmbreite angeordnet sein, zum Beispiel mit einem Abstand von zirka 35 Millimetern, oder sie können auch variabel oder anpassbar ausgestaltet sein, wie dies nachfolgend näher beschrieben wird. Dadurch lässt sich also ein besonders einfacher und kostengünstiger Haltemechanismus zum Halten eines Films bereitstellen.

Die Halterung kann dabei beispielsweise zumindest eine Feder aufweisen, die mit dem ersten und/oder zweiten Halterungsteil gekoppelt ist und mittels welcher im Falle eines auf der ersten und zweiten Filmauflagefläche aufliegenden Filmabschnitts die einander zugewandten Haltekräfte über das erste und zweite Halterungsteil auf die Kanten des Filmabschnitts aufbringbar sind. Eine solche Feder kann zum Beispiel durch eine handelsübliche Blattfeder, Spiralfeder, insbesondere auch mehrere solche in Umfangsrichtung angeordnete Federn, ausgebildet sein, oder zum Beispiel als elastisches Material, zum Beispiel Gummi oder ein anderes natürliches oder auch künstlich hergestelltes Elastomer. Durch ein solches federndes Element lässt sich ein Film besonders einfach einspannen beziehungsweise einklemmen. Zudem können hierdurch auch auf besonders einfache Weise Toleranzen in der Filmbreite ausgeglichen werden. Eine solche Feder kann zum Beispiel mit dem ersten Halterungsteil gekoppelt sein und dieses in Richtung des zweiten Halterungsteils pressen. Umgekehrt können eine oder mehrere solcher Federn auch mit dem zweiten Halterungsteil gekoppelt sein und dieses gegen beziehungsweise in Richtung des ersten Halterungsteils pressen. Natürlich können auch beide Halterungsteile mit solchen Federn gekoppelt sein.

Bei einer weiteren vorteilhaften Ausgestaltung der Erfindung ist der erste und/oder zweite Halterungsteil aus einem elastischen und/oder adhäsiven Material gebildet insbesondere einem Kunststoff, oder mit einem solchen zumindest beschichtet. Hierdurch lässt sich vorteilhafterweise eine hohe Haftreibung zwischen dem Film beziehungsweise dessen Kanten und den jeweiligen Halterungsteilen bereitstellen. Hierfür können beispielsweise bekannte adhäsive Materialien, wie diese beispielsweise auch bei sogenannten PTR (Particle Transfer Rollers) verwendet werden. Insbesondere kann eine solche adhäsive Beschichtung aus einem weichen Polyurethan gebildet sein. Alternativ oder zusätzlich kann zum Beispiel als Material ein weicher Schaumstoff verwendet werden, der elastisch ausgebildet ist, insbesondere lokal elastisch. Durch solche Materialien bzw. Beschichtungen lässt sich dann vorteilhafterweise eine besonders gute Halterung und gleichzeitig eine hohe Haftreibung bereitstellen.

Bei einer weiteren vorteilhaften Ausgestaltung der Erfindung weist die Filmführvorrichtung einen nicht rotierbaren, insbesondere zumindest teilweise ringförmigen, Träger auf, auf welchen der erste und der zweite Rahmenteil jeweils drehbar gelagert sind. Nicht rotierbar kann sich hierbei zum Beispiel auf einen Tisch oder eine Unterlage beziehen, auf welcher die Filmführvorrichtung montiert sein kann. Dies stellt eine besonders kostengünstige Variante zur Lagerung der beiden Rahmenteile dar.

Werden die beiden Rahmenteile zum Transport des Films rotiert, so bewegen sich diese gleichförmig, das heißt mit der gleichen Rotationsgeschwindigkeit. Der dazwischen befindliche Träger, auf den die beiden Rahmenteile rotierbar gelagert sind, bleibt dagegen fest. Um weiterhin ein Durchleuchten des Films zu ermöglichen, stellt es eine besonders vorteilhafte Ausgestaltung dar, wenn der Träger in einem Abtastbereich einen in axialer Richtung zwischen dem ersten und zweiten Rahmenteil angeordneten lichtdurchlässigen Bereich aufweist. Vorzugsweise ist dieser lichtdurchlässige Bereich als eine Durchbrechung des Trägers ausgebildet. Theoretisch könnte als lichtdurchlässiger Bereich auch ein transparentes Fenster im sonst nicht transparenten Träger vorgesehen sein. Dies hat jedoch den Nachteil, dass, wenn der Träger nicht rotiert wird, so wie dies vorgesehen ist, kleine Staubteilchen auf einem solchen transparenten Fenster sich im abgetasteten Bild bemerkbar machen, was äußerst unerwünscht ist. Ist der lichtdurchlässige Bereich als Durchbrechung des Trägers ausgestaltet, das heißt als Öffnung, Loch oder ähnliches, so kann die Problematik der störenden Staubteilchen vorteilhafterweise vermieden werden und gleichzeitig kann ein statischer Träger zum Lagern der beiden Lagerteile verwendet werden, was wiederum den großen Vorteil hat, dass kein Antrieb für den Träger, sondern lediglich für die beiden Rahmenteile vorgesehen werden muss. Dies stellt damit eine besonders kostengünstige Ausführungsform der Filmführvorrichtung dar.

Bei einer weiteren Ausgestaltung der Erfindung weist die Filmführvorrichtung einen um die Rotationsachse rotierbaren, transparenten, insbesondere ringförmigen, Körper auf. Dieser ringförmige transparente Körper kann beispielsweise einen Glaskörper oder einen Kunststoffkörper darstellen. Auch dieser Körper kann nun vorteilhafterweise als Träger für die beiden Rahmenteile verwendet werden. Dies kann auf unterschiedliche Weise geschehen. Zum einen können der erste und der zweite Rahmenteil jeweils drehbar auf dem Körper gelagert sein, sodass der Körper relativ zum ersten und zweiten Rahmenteil rotierbar ist. Diese Variante hat den großen Vorteil, dass dieser ringförmige Körper, wie zum Beispiel ein Glasring, unabhängig von den beiden Rahmenteilen, insbesondere auch in entgegengesetzter Richtung, rotiert werden kann. Durch diesen Körper kann gleichzeitig auch ein gewünschtes Trägheitsmoment bereitgestellt werden, welches den Gleichlauf des Systems fördert. Dadurch, dass die Rotationsgeschwindigkeit dieses Körpers gleichzeitig unabhängig von der Rotation der Rahmenteile gesteuert werden kann, werden hierdurch deutlich mehr Anpassungsmöglichkeiten in Bezug auf die Gleichlaufeigenschaften bereitgestellt. Allerdings erfordert dies auch einen vom Antrieb der Rahmenteile unabhängigen Antrieb, Ringlager oder ähnliches, wie beispielsweise eine Kombination aus einem Motor, einem Getriebe zur Bereitstellung einer gewünschten Übersetzung, entsprechende Zahnräder und Ringlager.

Alternativ können der erste und zweite Rahmenteil drehfest bezüglich einer Rotation um die Rotationsachse mit dem Körper verbunden sein. In diesem Fall ist der Körper zwar nicht mehr unabhängig von den beiden Rahmenteilen rotierbar, vorteilhafterweise kann in diesem Fall aber ein gemeinsamer Antrieb sowohl für den Körper als auch für die beiden Rahmenteile verwendet werden, der zum Beispiel durch einen zentralen Motor an der Rotationsachse bereitgestellt werden kann. Nichtsdestoweniger kann durch diesen Körper, der wiederum vorzugsweise als Glaskörper ausgestaltet ist, das gewünschte Trägheitsmoment bereitgestellt werden. Besonders vorteilhaft ist es dabei vor allem, wenn das Trägheitsmoment möglichst groß, die träge Masse an sich jedoch möglichst klein ist, dass durch eine Massenverteilung, die möglichst weit von der Drehachse entfernt ist, erreicht werden kann. Deshalb ist es bevorzugt, dass dieser Träger ringförmig oder hohlzylinderförmig ausgebildet ist und nicht als Scheibe. Zudem ermöglicht die ringförmige Ausbildung dieses Körpers die Anordnung diverser Komponenten innerhalb dieses Rings, wie zum Beispiel eine Beleuchtungseinrichtung und/oder eine Bildaufnahmeeinrichtung. Dadurch, dass dieser Körper rotiert wird, machen sich auch Staubteilchen auf diesem Körper nicht bemerkbar, da sie durch die Rotation verwischt werden.

Im Falle der Verwendung des oben beschriebenen statischen Trägers zur Lagerung der Rahmenteile kann das gewünschte Trägheitsmoment dagegen auf einfache Weise durch eine entsprechend große Masse der Rahmenteile selbst realisiert werden.

Bei einer weiteren vorteilhaften Ausgestaltung der Erfindung weist die Filmführvorrichtung einen Antriebsmotor auf, welcher zum Antreiben des Rahmens ausgelegt ist, insbesondere mittels welchem verschiedene Rotationsgeschwindigkeiten bereitstellbar und/oder einstellbar sind. Dieser Antriebsmotor kann, wie beschrieben, den Rahmen auch nur mittelbar antreiben, zum Beispiel den oben beschriebenen drehfest mit dem Rahmen verbundenen transparenten Körper antreiben und somit auch die beiden Rahmenteile oder es kann auch eigens ein Antriebsmotor zum Antreiben der beiden Rahmenteile, insbesondere gleichmäßigen und gleichförmigen Antreiben der beiden Rahmenteile, vorgesehen sein. In Kombination mit einem weiteren Zuführantrieb für eine Zuführspule und einen Abführantrieb für eine Abführspule lässt sich so besonders vorteilhaft ein Drive-Antrieb bereitstellen. Durch die mittels des Rahmens bereitgestellte Halterung, welche eine Entkopplung der Zugkräfte ermöglicht, können so vorteilhafterweise die Zugkräfte für die Zuführrolle und für die Abführrolle separat eingestellt werden. So lässt sich beispielsweise auch eine relativ fest gewickelte Filmspule in eine weichere Wicklung überführen, was zum Beispiel den Vorteil hat, dass weichere beziehungsweise lockerere Wicklungen eine bessere Durchlüftung des Films zulassen und damit schonender für den Film bei dessen Aufbewahrung sind.

Bei einer weiteren vorteilhaften Ausgestaltung der Erfindung weist die Filmführvorrichtung eine Einstelleinrichtung auf, mittels welcher ein Abstand des ersten Rahmenteils vom zweiten Rahmenteil in axialer Richtung einstellbar ist. Hierdurch kann der Abstand der beiden Rahmenteile auf verschiedene Filmbreiten angepasst werden. Beispielsweise kann es mehrere diskrete Einstellmöglichkeiten geben, zum Beispiel in Anpassung an einen 35 Millimeter breiten Film oder einen 16 Millimeter breiten Film oder einen 8 Millimeter breiten Film, oder die Einstellmöglichkeit des Abstands kann kontinuierlich zwischen zwei Maximalstellungen variieren. Diese Maximalstellungen sind so bemessen, dass zumindest ein Film mit einer Breite von 35 Millimetern transportierbar ist und jeder beliebig schmälere Film bis zu einer Mindestbreite von 8 oder 7 Millimetern. Alternativ kann die Filmführvorrichtung auch modular ausgebildet sein, insbesondere mit austauschbaren Teilen, sodass sich durch Austausch Anpassungsmöglichkeiten an unterschiedliche Filmbreiten bereitstellen lassen. Beispielsweise könnte der oben beschriebene Träger, der rotationsfest ausgebildet ist, in unterschiedlichen Höhen in axialer Richtung bereitgestellt werden, wobei die Höhe dieses Trägers auch gleichzeitig den Abstand zwischen den beiden Rahmenteilen vorgibt. Durch Austausch dieses Trägers mit einem anderen Träger mit einer anderen Höhe kann so ebenfalls eine Anpassungsmöglichkeit an unterschiedliche Filmbreiten bereitgestellt werden. Dies hat den großen Vorteil, dass hierdurch wieder Kosten eingespart werden können, insbesondere für solche Benutzer, die zum Beispiel nur mit einer einzelnen Filmbreite, wie zum Beispiel 35 Millimetern arbeiten, sodass hier zusätzlich teure Einstellmöglichkeiten überflüssig sind. Für Benutzer, die mit variierenden Filmbreiten arbeiten, ist dagegen die Ausführung der Filmführvorrichtung mit einer Einstelleinrichtung zum Einstellen des Abstands zwischen den beiden Rahmenteilen in axialer Richtung besonders vorteilhaft.

Bei einer weiteren besonders vorteilhaften Ausgestaltung der Erfindung beträgt der Durchmesser des Rahmens mindestens 15 Zentimeter, vorzugsweise mindestens 20 Zentimeter. Prinzipiell sind dem Durchmesser nach oben keine Grenzen gesetzt, wobei aus Gründen der Bauraumeffizienz bevorzugt ist, dass der Durchmesser kleiner ist als 50 Zentimeter. Gerade ein Bereich um 20 Zentimeter hat sich als besonders praktikabel erwiesen, was viele Gründe hat. Zum einen stellt dies einen verhältnismäßig großen Durchmesser dar, und je größer der Duchmesser ist, desto mehr Vorteile ergeben sich. Beispielsweise treten ab einem Durchmesser von 20 cm selbst bei der Verwendung eines Glasrings, wie oben beschrieben, keine wesentlichen optischen Verzerrungen beim Durchleuchten des Films auf. Auf zusätzliche Entzerrungsoptiken kann damit vorteilhafterweise verzichtet werden. Zudem ist durch den vergrößerten Umfang auch insgesamt mehr Auflagefläche zum Auflegen des Films auf die beiden Filmauflageflächen einerseits möglich und mehr Haltefläche durch die Halterung an den Kanten des Films anderseits, wodurch hier entsprechend wieder die Haftreibung durch die vergrößerte Fläche erhöht werden kann. Mit anderen Worten wird bei einem Durchmesser von 20 Zentimetern eine besonders stabile Halterung ermöglicht. Insbesondere ermöglicht dies einen zuverlässigen Filmtransport mit besonders hohen Gleichlaufeigenschaften. Auch lässt sich durch einen möglichst großen Durchmesser ein besonders großes Trägheitsmoment bei gleichzeitig möglichst geringer Masse bereitstellen, da sich dies, wie bereits beschrieben, durch eine entsprechende Masseverteilung, die möglichst weit von der Rotationsachse entfernt ist, realisieren lässt. Zudem kann bei einem Durchmesser von mindestens 20 Zentimetern ausreichend Platz innerhalb des Rahmens beziehungsweise Trägers oder Glasrings bereitgestellt werden, um dort eine Kamera oder eine Beleuchtungseinrichtung anzuordnen. Auch ist ein solch großer Durchmesser besonders schonen für den Film beim Transport und gerade bei älteren Filmen kann ein Verdrillen oder Verdrehen deutlich effektiver vermieden werden. Insbesondere liegt bei einem solch großen Durchmesser auch ein deformierter oder sogar spiralförmig verdrehter Film plan am Rahmen an.

Des Weiteren betrifft die Erfindung auch eine Filmbearbeitungsanordnung mit einer erfindungsgemäßen Filmführvorrichtung oder einer ihrer Ausgestaltungen. Die Filmbearbeitungsanordnung kann beispielsweise als Schnitttisch oder Scanner ausgebildet sein. Beispielsweise kann die Filmbearbeitungsanordnung eine Filmzufuhr aufweisen, die zum Aufnehmen einer Filmspule ausgelegt ist, sowie auch eine Filmabfuhr, die zur Aufnahme ebenfalls einer Filmspule ausgelegt ist. Die Filmzufuhr kann also beispielsweise eine Filmspule mit einem Film aufnehmen, der über die Filmführvorrichtung auf die von der Filmabfuhr aufgenommene Filmspule aufgewickelt werden kann. Dabei können die Filmzufuhr und die Filmabfuhr, wie eingangs im Zusammenhang mit dem Drive-Antrieb beschrieben, einen Auf- und Abwickelmotor aufweisen, die sich selbst steuern und insbesondere den gewünschten Filmzug regeln. Hierbei kann also für die Filmzufuhr und für die Filmabfuhr jeweils unabhängig voneinander ein gewünschter Filmzug beziehungsweise eine Zugkraft eingestellt werden, die dann von den jeweiligen Motoren selbst eingeregelt wird. Das heißt, steigt der Filmzug über den Sollwert, so regelt der entsprechende Motor den Zug runter, sinkt dagegen der Filmzug, so regelt der entsprechende Motor ihn rauf. Durch die dazwischen befindliche Halterung, die durch die Filmführvorrichtung bereitgestellt wird, lassen sich somit vorteilhafterweise ein Drive-Antrieb bereitstellen und ein besonders schonender Filmtransport. Mit diesem System können nun vorteilhafterweise divergente Wicklungen unabhängig voneinander eingestellt werden, um zum Beispiel einen locker gewickelten Film in eine feste Rolle zu überführen, und vor allem auch umgekehrt, ohne dass sich der Film zusammenzieht.

Darüber hinaus gelten die für die erfindungsgemäße Filmführvorrichtung und ihre Ausgestaltungen genannten Vorteile in gleicher Weise für die erfindungsgemäße Filmbearbeitungsanordnung und ihre Ausgestaltungen.

Bei einer weiteren vorteilhaften Ausgestaltung weist die Filmbearbeitungsanordnung weiterhin eine Beleuchtungseinrichtung und eine Bilderfassungseinrichtung, wie zum Beispiel eine Kamera, auf, die in radialer Richtung auf unterschiedlichen Seiten des Rahmens angeordnet sind. Beispielsweise kann also die Bilderfassungseinrichtung innerhalb des Rahmens angeordnet sein und die Beleuchtungseinrichtung außerhalb des Rahmens, wobei dann entsprechend die Beleuchtungseinrichtung, zum Beispiel im oben genannten Abtastbereich, den vorbeigeführten Film beleuchtet, insbesondere durchleuchtet, was wiederum von der sich auf der anderen Seite befindlichen Bilderfassungseinrichtung erfasst wird. Die Beleuchtungseinrichtung kann in jeder beliebigen Art und Weise ausgestaltet sein und eine oder mehrere Lichtquellen, zum Beispiel LEDs oder andere Lichtquellen, aufweisen. Auch kann die Beleuchtungseinrichtung zur Lichtemission in jedem beliebigen spektralen Bereich ausgelegt sein, zum Beispiel im UV-Bereich, im Infrarotbereich und/oder im sichtbaren Bereich.

Weiterhin kann es vorgesehen sein, dass die Bilderfassungseinrichtung eine Optik aufweist, die dazu ausgelegt ist, beim Aufnehmen eines auf dem Film befindlichen Einzelbildes durch den transparenten, ringförmigen Körper hindurch eine durch den Körper bedingte optische Verzerrung zumindest zum Teil zu kompensieren. Dies ist insbesondere dann vorteilhaft, wenn der Durchmesser des oben beschriebenen ringförmigen Körpers relativ klein ist. Daraus resultierende optische Verzerrungen können somit vorteilhafterweise durch eine entsprechende Optik der Kamera ausgeglichen werden.

Bei einer besonders vorteilhaften Ausgestaltung der Erfindung weist die Filmbearbeitungsanordnung ein erstes und ein zweites Federrollenpaar mit je zwei zueinander beabstandeten Rollen auf, wobei der Film durch das erste Federrollenpaar durchführbar und der Filmführvorrichtung zuführbar ist und von der Filmführvorrichtung durch die Führung durch das zweite Federrollenpaar abführbar ist. Durch solche Federrollenpaare lässt sich der Gleichlauf des Films deutlich steigern, da geringfügige Schwankungen in der Zugkraft und/oder Geschwindigkeit durch ein solches Federrollenpaar vorteilhafterweise ausgeglichen werden können. Dies ist besonders für eine gute Tonwiedergabe besonders von Vorteil.

Bei einer weiteren vorteilhaften Ausgestaltung der Erfindung ist das erste und/oder zweite Federrollenpaar in seiner Position relativ zur Filmführvorrichtung einstellbar, sodass eine Länge des auf der ersten und zweiten Filmauflagefläche aufliegenden Filmabschnitts des Films einstellbar ist. Mit anderen Worten lässt sich durch eine entsprechende Positionierung des ersten und/oder zweiten Federrollenpaars der Umschlingungswinkel, mit dem der Film um die Filmführvorrichtung geschlungen ist, einstellen. Entsprechend lässt sich also, da der Radius der Filmführvorrichtung beziehungsweise deren Rahmen konstant ist, auch der Abschnitt des Films in Bezug auf seine Länge, mit welchem der Film auf den jeweiligen Filmauflageflächen aufliegen soll, durch geeignete Positionierung des Federrollenpaars beziehungsweise der beiden Federrollenpaare bestimmen. Dies wirkt sich auch wiederum entsprechend auf die Haftreibung des Films aus, die sich hierdurch ebenfalls variieren und damit geeigneten anpassen lässt.

Weitere Vorteile, Merkmale und Einzelheiten der Erfindung ergeben sich aus der nachfolgenden Beschreibung bevorzugter Ausführungsbeispiele sowie anhand der Zeichnung. Dabei zeigen:
- Fig. 1: eine schematische Darstellung Filmbearbeitungsanordnung mit einer Filmführvorrichtung in einer Draufsicht mit einer innenliegenden Kamera gemäß einem Ausführungsbeispiel der Erfindung;
- Fig. 2: eine schematische Darstellung einer Filmbearbeitungsanordnung mit einer Filmführvorrichtung mit einer außenliegenden Kamera in einer Draufsicht gemäß einem weiteren Ausführungsbeispiel der Erfindung;
- Fig. 3: eine schematische Schnittdarstellung durch eine Filmführvorrichtung gemäß einem Ausführungsbeispiel der Erfindung;
- Fig. 4: eine schematische und perspektivische Darstellung einer Filmbearbeitungsanordnung ohne eingelegtem Filmband gemäß einem Ausführungsbeispiel der Erfindung; und
- Fig. 5: eine schematische und perspektivische Darstellung einer Filmbearbeitungsanordnung mit einer Filmführvorrichtung mit eingelegtem Filmband gemäß einem Ausführungsbeispiel der Erfindung.

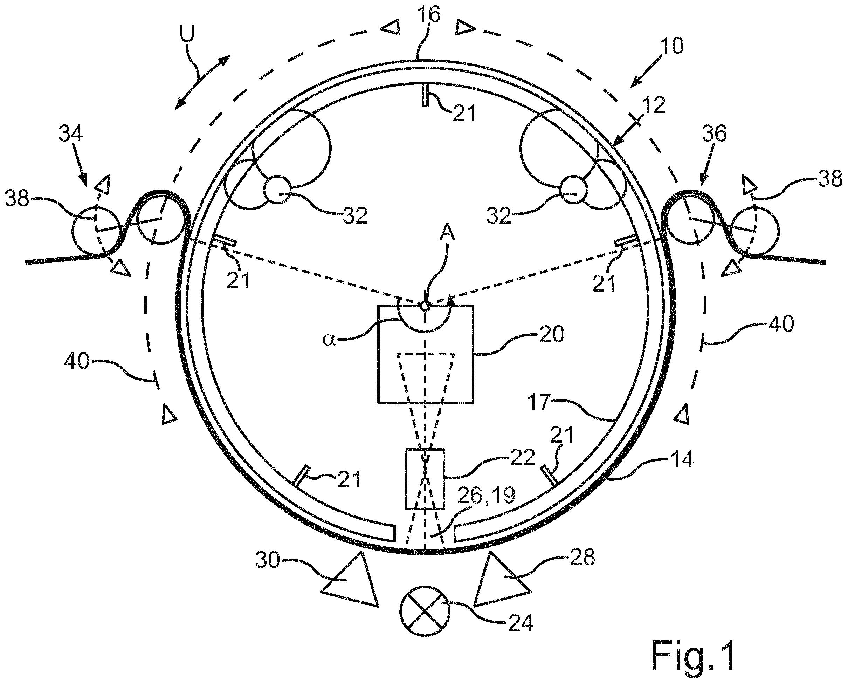

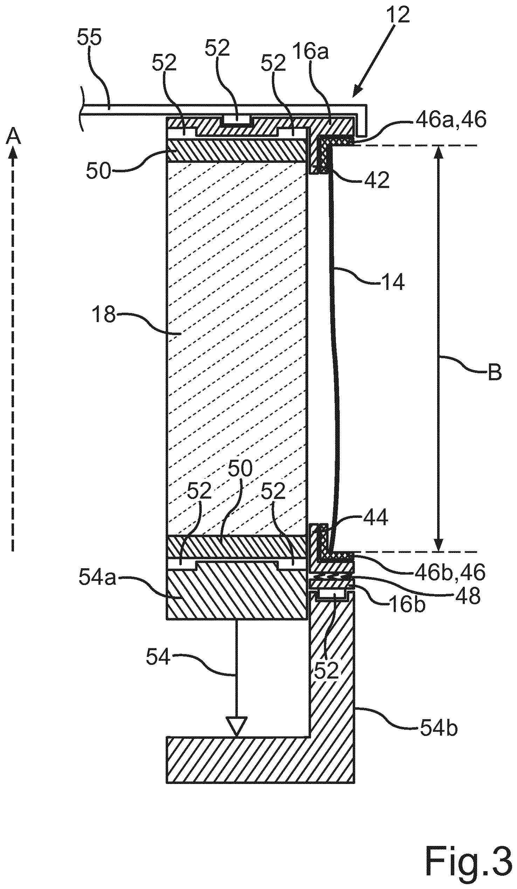

Fig. 1 zeigt eine schematische Darstellung einer Filmbearbeitungsanordnung 10 in einer Draufsicht mit einer Filmführvorrichtung 12 gemäß einem Ausführungsbeispiel der Erfindung. Die Filmführvorrichtung 12 ist dabei für einen Vorbeitransport eines Films 14 ausgelegt. Zu diesem Zweck umfasst die Filmführvorrichtung 12 einen um eine Rotationsachse A rotierbaren Rahmen 16, der zweiteilig ausgeführt ist, wie dies später anhand von Fig. 3 näher beschrieben wird. Diese beiden Rahmenteile 16a, 16b werden dabei von einem statischen, hufeisenförmigen Träger 17, der im Folgenden auch als Hufeisenträger 17 bezeichnet wird, getragen. Dieser kann aus einem beliebigen Material gebildet sein und muss nicht transparent sein. Stattdessen ist weist der Träger im Bereich eines Abtastfensters 26 einen lichtdurchlässigen Bereich in Form einer Durchbrechung bzw. Öffnung 19 auf, so dass im Bereich dieses Abtastfensters 26 ein Lichtdurchlass bereitgestellt ist. Weiterhin ist in diesem Beispiel eine Kamera 20 innerhalb des Rahmens 16, insbesondere innerhalb des Hufeisenträgers 17, angeordnet, sowie ein vor der Kamera 20 positioniertes Aufnahmeobjektiv 22. Außerhalb des Rahmens 16 ist eine Lichtquelle 24 angeordnet, die den am Abtastfenster 26 vorbei geführten Film 14 beleuchtet beziehungsweise durchleuchtet, sodass das den Film 14 durchleuchtende Licht der Lichtquelle 24 von der Kamera 20 erfasst werden kann. Zudem weist die Filmbearbeitungsanordnung 10 weiterhin einen Tonsensor 28 auf, der dazu ausgelegt ist, eine Tonspur des Films 14 abzutasten, insbesondere optisch und berührungslos. Der Tonsensor 28 oder ein weiterer Sensor kann so gestaltet sein, dass auch COMOPT und COMMAG-Tonformate gelesen werden können. Auch kann der Tonsensor 28 oder ein weiterer Sensor so gestaltet sein, dass auch SEPMAG-Perfoband von einem Magnetkopf gelesen werden kann.

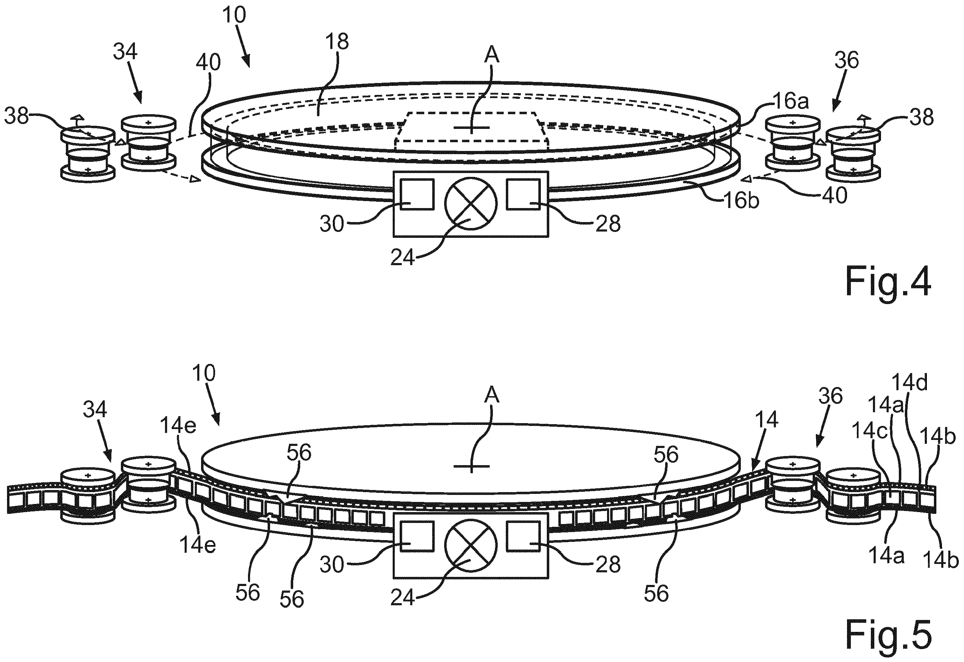

Zudem weist die Filmbearbeitungsanordnung 10 auch eine Perforationssensorik 30 auf, die dazu ausgelegt ist, eine Perforation 14a (vgl. Fig. 5) des Films 14 zu erfassen, insbesondere welche zu einer berührungslosen Erkennung der Perforation 14a des Filmbandes 14 ausgelegt ist. Die Kamera 20 kann dann in Abhängigkeit von einem durch die Perforationssensorik 30 bereitgestellten Signal getriggert werden, sodass immer dann ein Bild von der Kamera 20 aufgenommen wird, wenn sich ein Einzelbild des Films 14 vor dem Abtastfenster 26 befindet. Hierdurch kann vorteilhafterweise die Belichtungszeit beziehungsweise die Aufnahmezeit sehr kurz gehalten werden und ein Verwischen des Bildes verhindert werden. Mit anderen Worten wird die Aufnahme der Kamera 20 durch die Perforationssensorik 30 getriggert. In gleicher Weise kann auch die Beleuchtung des Films 14 durch die Beleuchtungseinrichtung bzw. Lichtquelle 24 getriggert erfolgen.

Weiterhin weist in diesem Fall die Filmführvorrichtung 12 zwei Antriebsmotoren 32 auf. Hierdurch lässt sich der Rahmen 16 antreiben. Zum Antreiben des Rahmens 16 kann aber auch nur ein einziger Antriebsmotor 32 verwendet werden, der zum Beispiel mit der Rotationsachse A gekoppelt sein kann. Weiterhin ist der Rahmen 16 beziehungsweise die beiden Rahmenteile 16a, 16b auf dem Hufeisenträger 17 drehbar gelagert. Durch hier lediglich schematisch dargestellte Befestigungselemente 21 kann der Hufeisenträger 17 zudem an einer Unterlage, zum Beispiel einem Tisch, befestigt bzw. montiert sein.

Zudem weist die Filmbearbeitungsanordnung 10 auch ein erstes Federrollenpaar 34 und ein zweites Federrollenpaar 36 auf. Die äußere der hier dargestellten Rollen eines jeweiligen Federrollenpaars 34, 36 ist dabei flexibel um die Innere der beiden Rollen beweglich angeordnet, was durch den Pfeil 38 veranschaulicht ist. Hierdurch können Unterschiede in der Zugkraft, beziehungsweise Zugkraftvariationen, abgefangen und ausgeglichen werden, was die Gleichlaufeigenschaften deutlich verbessert. Zudem können die jeweiligen Federrollenpaare 34, 36 an unterschiedlichen Positionen in Umfangsrichtung U relativ zur Filmführvorrichtung 12 positioniert werden, was durch die Pfeile und die sich zwischen den Pfeilen befindliche gestrichelte Linie 40 veranschaulicht ist. Dadurch lässt sich bestimmen, wie groß der Längsabschnitt des Films 14 ist, der am Rahmen 16 der Filmführvorrichtung 12 anliegen kann. Insbesondere lässt sich hierdurch der in Fig. 1 dargestellte Umschlingungswinkel α einstellen.

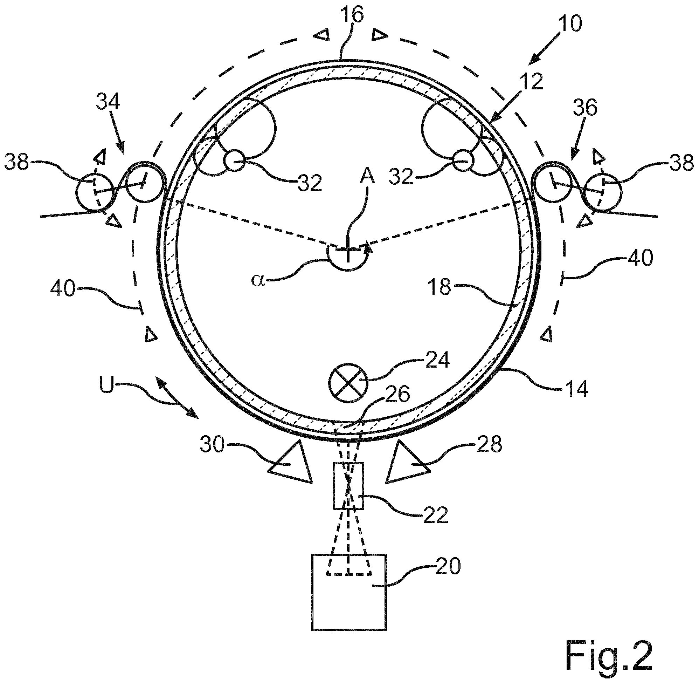

Fig. 2 zeigt eine schematische Darstellung einer Filmbearbeitungsanordnung 10 in einer Draufsicht mit einer Filmführvorrichtung 12 gemäß einem weiteren Ausführungsbeispiel der Erfindung. Insbesondere kann die Filmbearbeitungsanordnung 10 wie zu Fig. 1 beschrieben ausgebildet sein mit den Unterschieden, dass zum einen anstelle des statischen Hufeisenträgers 17 ein ringförmiger, um die Rotationsachse A rotierbarer Glaskörper 18 in Form eines Glasrings 18 vorgesehen ist, und zum anderen hierbei nun die Lichtquelle 24 innerhalb des Rahmens 16 bzw. innerhalb des Glaskörpers 18 angeordnet ist und die Kamera 20 sowie das Objektiv 22 außerhalb des Rahmens. Je nach zur Verfügung stehendem Bauraum kann also die Kamera 20 sowie die Beleuchtungseinrichtung bzw. Lichtquelle 24 entsprechend positioniert werden. Diese beiden Rahmenteile 16a, 16b werden nun dem Glasring 18 getragen. Dieser kann auch aus einem anderen Material als Glas gebildet sein, zum Beispiel aus einem Kunststoff. Vorzugsweise ist dieser transparent ausgebildet, damit er von Licht durchleuchtet werden kann. Weiterhin sind auch in diesem Fall wieder zwei Antriebsmotoren 32 auf vorgesehen. Hierdurch lassen sich nun der Rahmen 16 sowie auch der Glaskörper 18 antreiben, insbesondere auch unabhängig voneinander, was vor allem bei geringen Filmtransportgeschwindigkeiten die Abbildung von Schmutz und Schäden auf dem Glaskörper verringern kann, wenn dann der Glaskörper 18 schneller rotiert wird als der Rahmen 16 und damit der Film 14. Zu diesem Zweck können beispielsweise der Rahmen 16 beziehungsweise die beiden Rahmenteile auf dem Glaskörper 18 drehbar gelagert sein. Es kann aber auch vorgesehen sein, dass diese rotationsfest miteinander verbunden sind, sodass zum Antreiben des Rahmens 16 sowie des Glaskörpers 18 nur ein einziger Antriebsmotor 32 verwendet werden kann, der zum Beispiel mit der Rotationsachse A gekoppelt sein kann.

Fig. 3 zeigt eine schematische Querschnittsdarstellung durch eine Filmführvorrichtung 12 gemäß einem Ausführungsbeispiel der Erfindung. Auch hierbei kann nunmehr die Filmführvorrichtung 12 wie zuvor beschrieben ausgebildet sein. Deutlich erkennbar ist hierbei nun die zweiteilige Ausführung des Rahmens 16. Dieser weist ein erstes Rahmenteil 16a und ein zweites Rahmenteil 16b auf. Das erste Rahmenteil 16a umfasst weiterhin eine erste Filmauflagefläche 42. In gleicher Weise umfasst auch das zweite Rahmenteil 16b eine zweite Filmauflagefläche 44. Die Normalvektoren dieser Filmauflageflächen 42, 44 sind also entsprechend parallel zueinander und in radialer Richtung bezüglich der Rotationsachse A ausgerichtet. Wie hier deutlich zu erkennen ist, weist der Rahmen 16 nun weiterhin vorteilhafterweise eine Halterung 46 auf, die wiederum einen ersten Halterungsteil 46a und einen zweiten Halterungsteil 46b umfasst. Diese Halterungsteile 46a, 46b stehen in radialer Richtung über die Filmauflageflächen 42, 44 hinaus. Weiterhin kann die Halterung eine Feder oder ein anderweitiges elastisches Element 48 aufweisen und/oder die entsprechenden Halterungsteile 46a, 46b können entsprechend aus einem elastischen Material ausgebildet sein. Beispielsweise können sie aus einem elastischen Kunststoff wie zum Beispiel einem weichen Schaumstoff ausgebildet sein. Zudem können diese Halterungsteile 46a, 46b mit einem adhäsiven Material beschichtet sein, wie zum Beispiel PTR, wodurch eine besonders hohe Haftreibung bereitgestellt wird. Dies verhindert einen Schlupf des Films 14 beim Filmtransport. Hierdurch kann vorteilhafterweise gewährleistet werden, dass die Bewegungsgeschwindigkeit des Films 14 im Wesentlichen mit der Bewegungsgeschwindigkeit des Rahmens 16 übereinstimmt. Die Beschichtung zur Erhöhung des Haftwiderstands, das heißt das adhäsive Material, kann beispielsweise nicht nur an den Halterungsteilen 46a, 46b angeordnet sein, sondern beispielsweise auch an den Filmauflageflächen 44, 42. Durch diese Halterung wird es vorteilhafterweise ermöglicht, dass durch die Filmführvorrichtung 12 Zugkräfte aufgenommen werden können. Dadurch kann die Filmführvorrichtung 12 den dritten Antrieb für einen Drive-Antrieb bereitstellen.

Weiterhin ist in diesem Beispiel in Fig. 3 der Rahmen 16 bzw. die einzelnen Rahmenteile 16a, 16b bezüglich des Glaskörpers 18 drehbar gelagert. Zu diesem Zweck sind zwischen den Rahmenteilen 16a, 16b und dem Glaskörper 18 bzw. der Halterung 50 des Glaskörpers 18 entsprechende Lager 52 angeordnet. Dies ermöglicht eine relative Rotation zwischen dem Glaskörper 18 und dem Rahmen 16. Alternativ kann der Glaskörper 18 auch drehfest mit dem Rahmen 16 verbunden sein. Auch ist wiederum anstelle des rotierbaren Glaskörpers 18 als Träger auch ein nicht rotierbarer, und insbesondere nicht notwendigerweise transparenter Träger 17, wie in Fig. 1 dargestellt, anordenbar, der mit der Öffnung 19 im Bereich des Abtastfensters 26 ausgebildet sein kann. Auf diesem Träger 17 können die Rahmenteile 16a, 16b ebenso drehbar gelagert sein.

Weiterhin kann die Filmführvorrichtung 12 auch eine Einstelleinrichtung aufweisen, die hier nur schematisch durch den Pfeil 54 veranschaulicht ist, und mittels welcher ein Abstand zwischen dem ersten und zweiten Rahmenteil 16a, 16b einstellbar ist. Diese Einstellvorrichtung 54 kann also entsprechend relativ zueinander bewegliche Teile 54a, 54b aufweisen. Hierdurch lässt sich der Abstand vorteilhafterweise auf verschiedene Filmbreiten B einstellen. Optional kann auch eine Abdeckung 55 zum Schutz der Vorrichtung vorgesehen sein.

Fig. 4 zeigt eine schematische und perspektivische Darstellung einer Filmbearbeitungsanordnung 10 ohne eingelegten Film 14, und Fig. 5 eine schematische und perspektivische Darstellung dieser Filmbearbeitungsanordnung 10 mit eingelegtem Film 14. Die Filmbearbeitungsanordnung 10 kann dabei wie zuvor beschrieben ausgebildet sein. Wie hier deutlich zu erkennen ist, weist der Film in diesem Beispiel eine Perforation 14a in einem jeweiligen Randbereich 14b des Films 14 auf. Zudem weist der Film mehrere Einzelbilder 14c auf sowie in dieser Darstellung in Fig. 5 eine oberhalb der Einzelbilder 14c verlaufende Tonspur 14d. Wie weiterhin zu erkennen ist, weist die Perforation 14a an manchen Stellen eine Beschädigung 56 auf. Durch die Erfindung und ihre Ausgestaltungen wird es dennoch ermöglicht, den Film 14 mit besonders hohem Gleichlauf stabil zu halten und durch die die Aufnahme der Zugkräfte am Filmband können vor und nach der Filmführvorrichtung 12 unterschiedliche und konstante Filmzugkräfte am selben Filmband eingestellt werden.

Insgesamt zeigen die Beispiele wie durch die Erfindung eine Filmführvorrichtung in Form eines rollenden Bildfensters bereitgestellt werden kann, welche einen besonders schonenden und sicheren Transport mit guten Gleichlaufeigenschaften speziell auch für gealterte, zerfallene und verformte Filme ermöglichen, wobei zudem unterschiedliche und konstante Zugkräfte auf der Auf- und Abwickelseite ermöglicht werden und auch hervorragende Bildstandseigenschaften für Bild- und Tonaufnahmen erzielt werden können.

## Patentansprüche

1. Filmführvorrichtung (12) für einen Vorbeitransport eines Films (14) an einer Abtasteinheit (20, 24, 28, 30), wobei die Filmführvorrichtung (12) einen um eine Rotationsachse (A) rotierbaren Rahmen (16) aufweist, der einen ersten Rahmenteil (16a) mit einer ersten Filmauflagefläche (42) und einen zweiten Rahmenteil (16b) mit einer zweiten Filmauflagefläche (44) aufweist, wobei die erste und zweite Filmauflagefläche (42, 44) jeweils zylinderförmig ausgebildet sind, in Umfangsrichtung (U) bezüglich der Rotationsachse (A) verlaufen und in axialer Richtung bezogen auf die Rotationsachse (A) zueinander angeordnet sind,
**dadurch gekennzeichnet, dass**
der Rahmen (16) eine Halterung (46) zum Halten zumindest eines auf der ersten und zweiten Filmauflagefläche (42, 44) aufliegenden Filmabschnitts eines Films (14) aufweist, die dazu ausgelegt ist, auf zwei gegenüberliegende Kanten (14d) des Filmabschnitts, die den Filmabschnitt in seiner Breite (B) begrenzen, einander zugewandt gerichtete Haltekräfte aufzubringen.

2. Filmführvorrichtung (12) nach Anspruch 1,
**dadurch gekennzeichnet, dass**
die Halterung (46) einen ersten Halterungsteil (46a) und einen zweiten Halterungsteil (46b) aufweist, wobei der erste Rahmenteil (16a) den ersten Halterungsteil (46a) und der zweite Rahmenteil (16b) den zweiten Halterungsteil (46b) umfasst, wobei der erste und zweite Halterungsteil (46a, 46b) jeweils in radialer Richtung bezüglich der Rotationsachse (A) über die erste und zweite Filmauflagefläche (42, 44) hinausstehen, und wobei das erste und zweite Halterungsteil (46a, 46b) derart angeordnet sind, dass diese im Falle eines auf der ersten und zweiten Filmauflagefläche (42, 44) aufliegenden Filmabschnitts eine jeweilige Kanten (14d) des Filmabschnitts kontaktieren.

3. Filmführvorrichtung (12) nach Anspruch 2,
**dadurch gekennzeichnet, dass**
die Halterung (46) zumindest eine Feder (48) aufweist, die mit dem ersten und/oder zweiten Halterungsteil (46a, 46b) gekoppelt ist und mittels welcher im Falle eines auf der ersten und zweiten Filmauflagefläche (42, 44) aufliegenden Filmabschnitts die einander zugewandten Haltekräfte über das erste und zweite Halterungsteil (46a, 46b) auf die Kanten (14d) des Filmabschnitts aufbringbar sind.

4. Filmführvorrichtung (12) nach Anspruch 2 oder 3,
**dadurch gekennzeichnet, dass**
der erste und/oder zweite Halterungsteil (46a, 46b) aus einem elastischen und/oder adhäsiven Material gebildet ist, insbesondere einem Kunststoff.

5. Filmführvorrichtung (12) nach einem der vorhergehenden Ansprüche,
**dadurch gekennzeichnet, dass**
die Filmführvorrichtung (12) einen nicht rotierbaren, insbesondere zumindest teilweise ringförmigen, Träger (17) aufweist, auf welchem der erste und der zweite Rahmenteil (16a, 16b) jeweils drehbar gelagert ist.

6. Filmführvorrichtung (12) nach einem der vorhergehenden Ansprüche,
**dadurch gekennzeichnet, dass**
der Träger (17) in einem Abtastbereich (26) einen in axialer Richtung zwischen dem ersten und zweiten Rahmenteil (16a, 16b) angeordneten lichtdurchlässigen Bereich (19) aufweist.

7. Filmführvorrichtung (12) nach einem der vorhergehenden Ansprüche,
**dadurch gekennzeichnet, dass**
die Filmführvorrichtung (12) einen um die Rotationsachse (A) rotierbaren, transparenten, insbesondere ringförmigen, Körper (18) aufweist, wobei
- der erste und der zweite Rahmenteil (16a, 16b) jeweils drehbar auf dem Körper (18) gelagert sind, sodass der Körper relativ zum ersten und zweiten Rahmenteil (16a, 16b) rotierbar sind; oder
- der erste und zweite Rahmenteil (16a, 16b) drehfest bezüglich einer Rotation um die Rotationsachse (A) mit dem Körper (18) verbunden sind.

8. Filmführvorrichtung (12) nach einem der vorhergehenden Ansprüche,
**dadurch gekennzeichnet, dass**
die Filmführvorrichtung (12) einen Antriebsmotor (32) aufweist, welcher zum Antreiben des Rahmens (16) ausgelegt ist, insbesondere mittels welchem verschiedene Rotationsgeschwindigkeiten bereitstellbar und/oder einstellbar sind.

9. Filmführvorrichtung (12) nach einem der vorhergehenden Ansprüche,
**dadurch gekennzeichnet, dass**
die Filmführvorrichtung (12) eine Einstelleinrichtung (54, 54a, 54b) aufweist, mittels welcher ein Abstand (B) des ersten Rahmenteils (16a) vom zweiten Rahmenteil (16b) in axialer Richtung (A) einstellbar ist.

10. Filmführvorrichtung (12) nach einem der vorhergehenden Ansprüche,
**dadurch gekennzeichnet, dass**
der Durchmesser des Rahmens (16) mindestens 15 cm, vorzugsweise mindestens 20 cm beträgt.

11. Filmbearbeitungsanordnung (10) mit einer Filmführvorrichtung (12) nach einem der vorhergehenden Ansprüche.

12. Filmbearbeitungsanordnung (10) nach Anspruch 11,
**dadurch gekennzeichnet, dass**
Filmbearbeitungsanordnung eine Beleuchtungseinrichtung (24) und eine Bilderfassungseinrichtung (20) aufweist, die in radialer Richtung auf unterschiedlichen Seiten des Rahmens (16) angeordnet sind.

13. Filmbearbeitungsanordnung nach einem der Ansprüche 11 oder 12,
**dadurch gekennzeichnet, dass**
die Bilderfassungseinrichtung (20) eine Optik aufweist, die dazu ausgelegt ist, beim Aufnehmen eines auf dem Film (14) befindlichen Einzelbildes (14b) durch den transparenten, ringförmigen Körper (18) hindurch eine durch den Körper (18) bedingte optische Verzerrung zumindest zum Teil zu kompensieren.

14. Filmbearbeitungsanordnung (10) nach einem der Ansprüche 11 bis 13,
**dadurch gekennzeichnet, dass**
die Filmbearbeitungsanordnung (10) ein erstes und ein zweites Federrollenpaar (34, 36) mit je zwei zueinander beabstandeten Rollen aufweist, wobei der Film (14) durch das erste Federrollenpaar (34, 36) durchführbar und der Filmführvorrichtung (12) zuführbar ist und von der Filmführvorrichtung (12) durch Führung durch das zweite Federrollenpaar (34, 36) abführbar ist.

15. Filmbearbeitungsanordnung (10) nach einem der Ansprüche 11 bis 14,
**dadurch gekennzeichnet, dass**
das erste und/oder zweite Federrollenpaar (34, 36) in seiner Position relativ zur Filmführvorrichtung (12) einstellbar ist, so dass eine Länge des auf der ersten und zweiten Filmauflagefläche (42, 44) aufliegenden Abschnitts des Films (14) einstellbar ist.
